# EUROPEAN PATENT APPLICATION

(11) **EP 0 611 086 A1**
(43) Date of publication of application: **17.08.1994**
(21) Application number: 94300761.7
(22) Date of filing: 02.02.1994
(51) Int. Cl.: A47J 39/02

(54) **Electrically powered, rotatable food server**

(30) Priority: 10.02.1993 GB 9302596
(71) Applicant: BITECH ENGINEERING, Dunleer, County Louth (IE)
(72) Inventor: Warren, Ronald Michael, Maidenhead, Berkshire (GB)
(74) Representative: Howick, Nicholas Keith

(57) **Abstract**

A dish support is rotatably mounted on a base (2). An electrical heating element heats the support and dishes resting on its surface. The support is preferably mounted on rollers (10) which run in a track (13) on the base (2). Thermal storage means in the support store heat supplied by the element. The support can be picked up and removed from the base to connect the element and thereby heat the storage medium. It can then be discontinued and placed on the base so that the dishes can be kept warm by the stored heat.

## Description

This invention relates to an electrically powered rotatable food server of the kind in which a dish support has a surface for receiving dishes of food, the dish support is rotatably mounted on a base and an electrically heating element heats the dish support and hence dishes resting on its surface.

EP-A-0 335 151 and EP-A-0 465 746 each disclose heated turntables including a dish support secured to, but rotatable on a base, the base having terminals for connection to a power supply. Electrical heating pads in the dish support, which are thermostatically controlled, supply heat directly to dishes placed on the pads when the base terminals are connected to a power supply. Poles pieces connected to the heating pads make sliding contact with pole pieces on the base so that current can be continuously supplied to the pads whilst the base is connected to the supply and when the turntable is rotated. In EP-A-0 465 746 the thermal pads are located within the recesses on the dish support to permit air to flow between the support and a dish placed on the pad to promote heat exchange.

A problem with the foregoing arrangements is that the dish support and base form a unit which is connected to the power supply in order to feed current continuously to the heating pads to keep the dishes warm. As the turntable is intended for use on a dining table, it is inconvenient to have a power supply lead connected to the unit. A lead trailing across the table is unattractive and it takes up space otherwise required for the purpose of dining. Also, there is a risk that a user could accidentally trip over the trailing lead thereby causing disconnection and/or pulling the unit across the table.

EP-A-0 447 724 discloses a food warming system which would give rise to similar problems. US-A-4 119 834 discloses a food warmer which employs heating lamps above trays mounted on a column. The column is rotatable about a base and the base has an electrical lead for connection to a power supply to feed current to the lamps. This arrangement suffers from similar problems, besides being too bulky for use on a dining table.

The present invention seeks to avoid these problems and to provide an electrically powered food surface which is more convenient to use.

In accordance with the invention, an electrically powered, rotatable food server comprises a dish support having a surface for receiving dishes of food; a base on which the dish support is rotatably mounted; an electrical heating element for heating the dish support and hence said surface; guide means and transport means respectively provided on the base and the dish support, or vice versa, to facilitate guided rotation of the dish support on the base; and thermal storage means in the dish support for storing heat supplied by the element, the guide means and transport means cooperating so that the dish support is independent of the base, which enables the dish support to be picked up by a user and removed from the base, the element being subsequently connectable to a power source for supplying heat to the storage medium and disconnectable to enable the dish support to be replaced on the base whereby dishes are kept warm by the heat stored in the storage medium.

An advantage of this arrangement is that the base has no power lead or any electrical connections which need to be attached to a power supply. Therefore, the base can merely rest on a dining table ready to receive the dish support when diners take their place at the table. As the dish support is easily removable from the base, it can be taken, e.g. into a kitchen where its heating element is connected to a power supply socket. The storage medium is then thermally charged, preferably under thermostatic control, so that dishes of food can be placed on the surface of the dish support which is subsequently disconnected from the power supply. The loaded and heated dish support can then be carried from the kitchen and placed on the base in the dining room, where the storage medium dissipates heat and keeps the dishes warm during a meal. Therefore, no trailing electrical leads are present at the table.

In a preferred embodiment, guide means are provided on the base in the form of a circular track or groove. The transport means are rollers on the dish support, which sit in this groove and thereby facilitate movement of the dish support and in the circular track when the server is rotated to a desired position for serving a selected dish. However, the rollers may be provided on the base and the guide track or groove may be provided on the dish support to achieve the same purpose. The guide means does not need to be a groove, since it could be a circular rail on which suitable shaped rollers are located. Rollers are preferred for ease of construction, but the term "transport means" would incorporate any other suitable means (such as slides) to facilitate movement.

In the preferred embodiment of the invention, the thermal storage means is in the form of a disc beneath which the heating element or elements are mounted. Preferably, an insulated frame or rim, of annular form, surrounds the periphery of the disc to provide a cool surface which can be touched by users to rotate the dish support. Preferably, this rim extends downwardly beyond, e.g. the extent of rollers provided on the dish support, so that the rim acts as a stable base, for the dish support, when placed on (e.g.) a table surface. This prevents the dish support from moving, on the rollers, whilst awaiting dishes to be placed on its surface. The upper surface of this disc is suitably the surface for receiving the dishes of food, but the disc may be covered by a sheet of material so that it is not in direct contact with the dishes. The surface may be substantially flat, or it may be recessed so as to receive suitably shaped dishes which are received within the corresponding recesses.

The thermal storage medium may be of the kind used in thermal storage heaters, or a ceramic which has thermal storage properties and which enables a suitable decoration to be applied to the dish receiving surface. The thermal storage means may also include a substance which changes state at a predetermined temperature. For example, such a substance can become molten, then heated, so that heat energy is stored in melting the substance. Subsequently, when the power supply is turned off, thermal energy is dissipated by the storage medium due to the latent heat of fusion, i.e. as the substance solidifies. This has the advantage that heat is lost at a substantially uniform temperature during the change of state. Combinations of such thermal storage means may be used to achieve the required advantage.

A preferred embodiment of the invention will now be described with reference to the accompanying Drawings in which:
Fig. 1 is a plan view of an electrically powered, rotatable food server,
Fig. 2 is a section on line XX of Fig. 1 showing part of the food server, and
Fig. 3 is a section on YY of another part of the food server shown in Fig. 1.

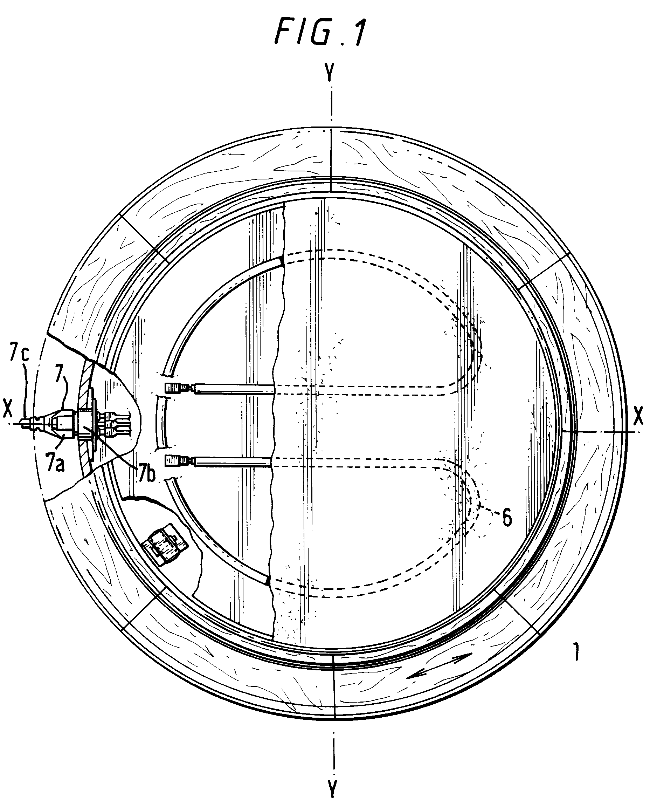

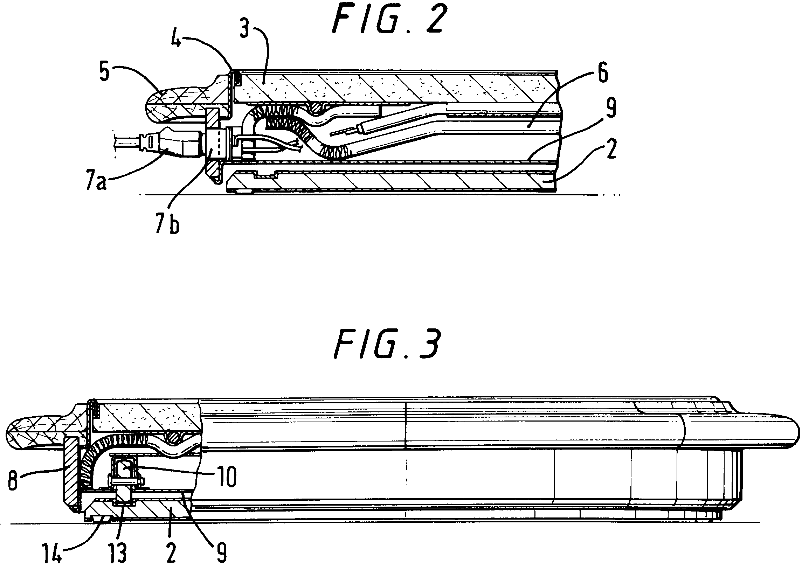

Referring to Figs. 1-3, the food server comprises a dish support 1 mounted on a base 2.

The dish support 1 includes a disc 3 made from a thermal storage medium, such as brick or ceramic to which is attached, by means of a bracket 4, an insulating annular rim 5. Rim 5 may be made of wood, for example, and it provides a pleasing circular border which can be safely touched by a user in order to rotate the dish support to a desired position for serving food. Mounted beneath disc 3 is a heating element 6 of the sheathed-wire type folded into a circular, hairpin form as shown by the dotted outline in Fig. 1. A plug and socket connector 7 supplies current to the heating element 6 when connected to a power supply (not shown). Part 7a of connector 7 is removed from part 7b, when the supply is disconnected. Part 7a is connected to a power supply lead 7c. A wall 8 depends from the peripheral rim 5 and forms a short cylindrical section which obscures the underside of the dish support 1. It will be noted that wall 8 projects downwardly further than the extent of roller 10, so as to provide a stable base when the dish support 1 is placed on a table. Wall 8 also provides a location for part 7b of the connector 7. A floor portion 9, of circular form, extends across lower edges of the cylindrical wall 8 so as to cover the underside of the dish support 1. Mounted on floor portion 9 are each of three (or four) rollers 10. Each roller 10 is carried on a shaft 11 which is mounted on a U-shaped bracket 12 attached to floor portion 9.

The base 2 is simply a circular disc having a circular groove 13 in which the rollers 10 are received when the dish support 1 is based on the base 2. The base 2 may have pads 14 attached to its underside to avoid marking a table.

In use, the base 2 is placed on a dining table which is laid for a meal. The dish support 1 is taken into the kitchen where lead 7c is connected to a power supply. Element 6 then transfers heat to the thermal storage medium 3 which can be used as a surface for receiving dishes after cooking. Element 6 is connected for sufficient time to reach a predetermined temperature, but a thermostatic control (not shown) of conventional construction may be used to maintain the uniform temperature whilst lead 7c is connected to the supply. When the meal is ready to be served, part 7a is detached from part 7c from the connector 7 and the dish support 1, bearing the dishes, is taken from the kitchen to the dining room where it is placed on the base 1. Rollers 10 are easily located in the circular groove 13 so that the dish support 1 can then be guided for rotational movement, by a user, to a desired position for serving. The thermal storage medium 3 dissipates heat keeping the dishes warm.

If the thermal storage medium includes a substance which changes state, this may be encapsulated in the body of the dish support (3) in such a way as to permit expansion and to enable a change of state (e.g. solid to liquid) to take place.

A suitable heat storage medium will have a high specific heat and a mass which enables a useful amount of heat energy to be stored. In the case of using a substance which changes state, this would also have, e.g. a high latent heat fusion.

## Claims

1. An electrically powered, rotatable food server comprising a dish support having a surface for receiving dishes of food; a base on which the dish support is rotatably mounted; an electrical heating element for heating the dish support and hence said surface; guide means and transport means respectively provided on the base and the dish support, or vice versa, to facilitate guided rotation of the dish support on the base; and thermal storage means in the dish support for storing heat supplied by the element, the guide means and transport means cooperating so that the dish support is independent of the base, which enables the dish support to be picked up by a user and removed from the base, the element being subsequently connectable to a power source for supplying heat to the storage medium and disconnectable to enable the dish support to be replaced on the base whereby dishes are kept warm by the heat stored in the storage medium.

2. A food server according to Claim 1 wherein the guide means are provided on the base in the form of a circular track, the transport means being rollers on the dish support, which sit in or on the track.

3. A food server according to Claim 1 wherein the transport means are rollers provided on the base and the guide means is a track on the dish support.

4. A food server according to any of Claims 1-3 wherein the thermal storage means is in the form of a disc on which the heating element or elements are mounted, the disc comprising or being made from a thermal storage medium.

5. A food server according to any preceding Claim wherein the thermal storage means comprises a substance which changes state at a predetermined temperature.

6. A food server according to Claim 4 wherein an insulated frame or rim, of annular form, surrounds the periphery of the disc to provide a cool surface which can be touched by users to rotate the dish support.

7. A food server according to Claim 4 or 6 wherein the upper surface of the disc is either substantially flat, or recessed so as to receive suitably shaped dishes.
